# EUROPÄISCHE PATENTSCHRIFT

(11) **EP 1 847 813 B1**
(45) Veröffentlichungstag und Bekanntmachung des Hinweises auf die Patenterteilung: **21.03.2012**
(21) Anmeldenummer: 07007570.0
(22) Anmeldetag: 13.04.2007
(51) Int. Cl.: G01F 1/58

(54) **Verfahren und Anordnung zur kontaktlosen Messung des Durchflusses elektrisch leitfähiger Medien**
Method and device for contactless mass flow measurement of electrically conductive fluids
Procédé et dispositif pour mesurer le débit de fluides conducteurs électriques sans contact

(30) Priorität: 21.04.2006 DE 102006018623
(43) Veröffentlichungstag der Anmeldung: 24.10.2007
(73) Patentinhaber: Helmholtz-Zentrum Dresden - Rossendorf e.V., 01328 Dresden (DE)
(72) Erfinder: Priede, Janis, Coventry CV3 1 AD (GB); Buchenau, Domenique, 99817 Eisenach (DE); Gerbeth, Gunter, 01328 Dresden (DE); Eckert, Sven, 01259 Dresden (DE)

(56) Entgegenhaltungen:
- JP-A- 8 211 083

## Beschreibung

Die Erfindung betrifft ein Verfahren und eine Anordnung zur kontaktlosen Messung des Durchflusses elektrisch leitfähiger Medien.

Durchflussmesser zeichnen sich dadurch aus, dass sie in der Lage sind, ein Messsignal zu liefern, welches proportional zu der über einen Querschnitt gemittelten Geschwindigkeit ist. Sie gelangen dort zum Einsatz, wo es darauf ankommt, das pro Zeiteinheit fließende Volumen zu ermitteln. Weit verbreitete Anwendungsgebiete sind z.B. die Bestimmung des Wasserverbrauchs von Haushalten, die Ermittlung von getankten Kraftstoffmengen oder die Messung des Durchflusses von Substanzen in der chemischen Industrie. Dazu werden häufig Turbinendurchflussmesser, Wirbeldurchflussmesser oder auch induktive Durchflussmesser verwendet. Bisher bekannte Durchflussmesser decken ein breites, aber nicht allumfassendes Anwendungsgebiet ab. So ist es z.B. bisher kaum möglich, den Volumendurchfluss von flüssigen Metallen bei hohen Temperaturen zuverlässig zu messen. In der chemischen Industrie gelangen häufig Durchflussmesser zum Einsatz, die nach dem elektromagnetischen Induktionsprinzip arbeiten. Die Grundlagen elektromagnetischer Durchflussmesser sind bekannt (J.A. Shercliff, The Theory of Electromagnetic Flow-Measurement, Cambridge University Press, 1962, S. 10-47). Die häufig verwendete Version solcher Durchflussmesser arbeitet mit Elektroden, die im unmittelbaren Kontakt mit dem fließenden Medium stehen müssen. Für Anwendungen bei Strömungen von flüssigen Metallen bei höheren Temperaturen stellt dies eine entscheidende Einschränkung dar. Wünschenswert und attraktiv sind dafür Lösungen, die es erlauben, den Durchfluss in völlig kontaktloser Art und Weise zu ermitteln.

In US 3191436 wird ein kontaktloses Verfahren beschrieben, bei dem die Spannung an zwei Empfängerspulen gemessen wird, die über einen Eisenkern mit der Erregerspule verbunden sind. Die Erregerspule wird dabei mit einem Wechselstrom beaufschlagt. Die zu messende Strömung befindet sich zwischen Erreger- und Empfängerspulen und erzeugt an den beiden Empfängerspulen ein Spannungssignal proportional zum Durchfluss. Das Spannungssignal hat die gleiche Frequenz wie der Wechselstrom in der Erregerspule, gemessen und ausgewertet wird die Amplitude der Wechselspannungsdifferenz zwischen den beiden Empfängerspulen.

JP 08 211083 A beschreibt eine Anordnung und ein Verfahren zur Messung des Durchflusses elektrisch leitfähiger Medien mit einer Spule und mindestens zwei Erfassungselementen, die symmetrisch zum angelegten Magnetfeld angeordnet und über Flussführungseisen mit der Sendespule verbunden sind, wobei Magnetfeldkomponenten gleicher Phase ausgewertet werden.

In DE 4316344 und US 5426983 wird ein kontaktloses Messprinzip der Durchflussmessung beschrieben, dass mit einem oder mehreren, externen statischen Magnetfeldern arbeitet. Die beschriebene Lösung zur Bestimmung des Durchflusses basiert wesentlich auf der Wechselwirkung der Strömung mit den inhomogenen Feldanteilen der extern angebrachten statischen Magnetfelder. Die genannten technischen Lösungen sind jedoch gegenüber äußeren Einflüssen sehr empfindlich und das Ergebnis oft fehlerbehaftet.

Des Weiteren ist ein Verfahren zur kontaktlosen Bestimmung der räumlichen Geschwindigkeitsverteilung in elektrisch leitfähigen Flüssigkeiten bekannt, wie in DE 10026052 und EP 1285277 beschrieben. Dabei wird die strömungsbedingte Änderung von zwei nacheinander angelegten, statischen Magnetfeldern an einer Vielzahl von Messstellen gemessen und anschließend die Strömungsverteilung im Medium daraus berechnet. Die räumliche Auflösung hängt dabei von der Anzahl der Messstellen ab. Ziel der vorgenannten technischen Lösungen ist es, mit einer hohen Anzahl von Messstellen eine gute Näherung für die räumliche Geschwindigkeitsverteilung zu erhalten. Daraus dann rückwirkend einen integralen Durchfluss zu berechnen, bedeutet einen erheblichen Umweg und schränkt die Robustheit und Genauigkeit der Durchflussbestimmung deutlich ein. Die in DE 10026052 A1 und EP 1285277 beschriebene Methode ist darüber hinaus nur für stationäre Zustände anwendbar, zeitliche Änderungen der Strömungsverhältnisse können nur über relativ lange Zeitskalen hinweg erfasst werden. Für die Durchflussmessung wird meist aber ein Verfahren gebraucht, das unmittelbar einen zum Durchfluss proportionalen Messwert liefert, der eine hohe zeitliche Auflösung der Durchflussschwankungen ermöglicht.

Die Aufgabe der vorliegenden Erfindung besteht darin, eine Durchflussmessung zu ermöglichen, die ohne mechanischen oder elektrischen Kontakt zum fließenden Medium auskommt, keine Vielzahl von Magnetfeldmessstellen erfordert, eine Durchflussmessung hoher zeitlicher Auflösung liefert, gegenüber äußeren Einflüssen möglichst unempfindlich ist und nicht die lageempfindlichen Amplituden in Empfängerspulen bei Wechselstromerregung benutzt.

Erfindungsgemäß wird die Aufgabe mit den in den Patentansprüchen 1 bzw. 3 dargelegten Merkmalen gelöst. Weitere Ausführungen sind in den Unteransprüchen angegeben.

Die Erfindung wird nachfolgend an je einem Ausführungsbeispiel für das Verfahren und für die Anordnung näher erläutert.

In der zugehörigen Zeichnung zeigen
Fig. 1 einen Schnitt durch die erfindungsgemäße Anordnung,
Fig. 2 eine Ausführungsvariante der Anordnung nach Fig. 1,
Fig. 3 und 4 Diagramme für typische Ergebnisse von Durchflussmessungen an einer Flüssigmetallströmung bei verschiedenen Frequenzen und unterschiedlichen Anordnungen der Erfassungselemente.

Ausführungsbeispiel für das Verfahren:

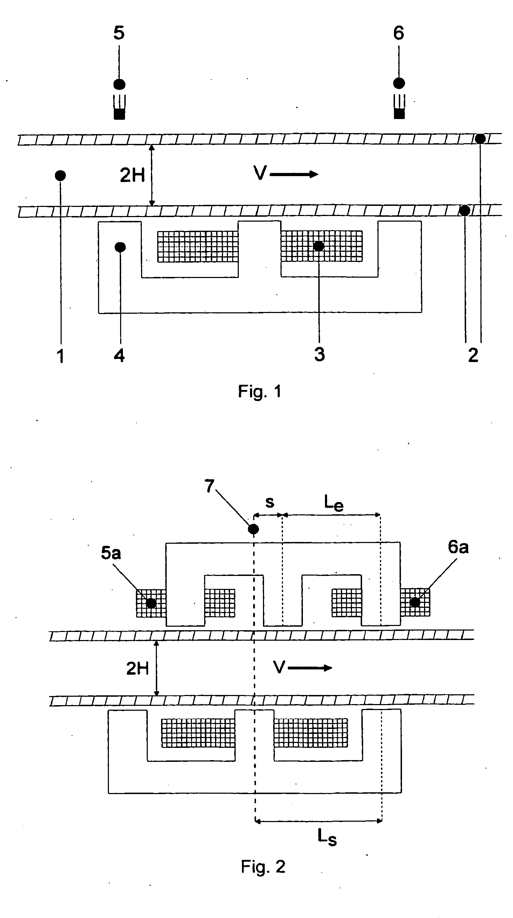

Ein Strömungskanal **1** der Dicke 2H mit den Kanalwänden **2** wird von einer Flüssigkeit mit der elektrischen Leitfähigkeit σ mit einer mittleren Geschwindigkeit V durchströmt. Eine Senderspule **3** mit der charakteristischen Länge 2Lₛ wird von einem Wechselstrom durchflossen und erzeugt ein magnetisches Wechselfeld. Die Strömung im Kanal beeinflusst das magnetische Wechselfeld in der Form, dass sich die Phasenverschiebung des an zwei Messorten außerhalb des Kanals gemessenen magnetischen Wechselfeldes in Abhängigkeit von der Strömung ändert. Diese Phasenverschiebung wird durch zwei Magnetfeldsensoren **5** und **6** gemessen und ist ein Maß für die mittlere Durchflussgeschwindigkeit im Strömungskanal. Die Magnetfeldsensoren **5** und **6** können auch durch zwei Empfängerspulen **5a** und **6a** (s. Fig. 2) ersetzt werden, mit denen die zeitliche Ableitung des magnetischen Flusses gemessen wird. Die beiden Magnetfeldsensoren **5** und **6** bzw. die beiden Empfängerspulen **5a** und **6a** haben einen Abstand von 2Lₑ. Die Lage der Sendespule ist durch ihre Mittelachse **7** charakterisiert. Die Mittelachse der Magnetfeldsensoren **5** und **6** bzw. der Empfängerspulen **5a** und **6a** kann von der Mittelachse **7** der Senderspule einen Abstand s haben wie in Fig. 2 dargestellt. Zur Fokussierung des magnetischen Flusses in der Senderspule **3** ist es vorteilhaft, Flussführungseisen **4** zu verwenden.

Ausführungsbeispiel für die Anordnung:

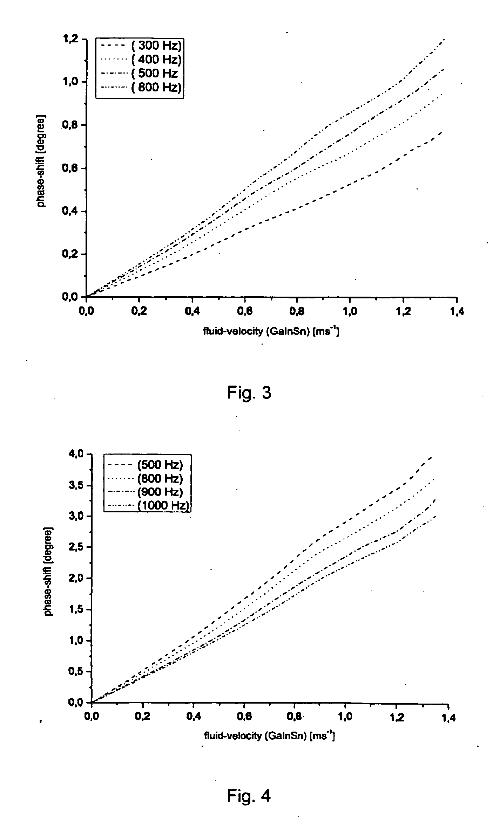

Die Funktionsweise der Durchflussbestimmung mittels Messung der strömungsinduzierten Phasenverschiebung wurde an einem Versuchsstand getestet, bei dem die metallische Flüssigkeit GalnSn durch einen runden Kanal **1** mit dem Innendurchmesser von 2H = 27 mm mit elektrisch nichtleitenden Wänden **2** strömt. Im Ausführungsfall erfolgte die Bestimmung der Phasenverschiebung mit zwei Empfängerspulen **5a** und **6a**, wobei die Empfängerspulen die vierfache Windungszahl im Vergleich zur Senderspule 3 haben. Die Spulensysteme waren direkt gegenüber angeordnet, d.h. s = 0. Fig. 3 zeigt die Kennlinien des Durchflussmessers in Abhängigkeit der Frequenz des Wechselstroms in der Senderspule. Die Phasenverschiebung wurde gemessen durch Auswertung der Differenzspannung zwischen den beiden Empfängerspulen mittels eines Lock-In-Verstärkers mit einem Tiefpassfilter.

Fig. 3 zeigt weitgehend lineare Abhängigkeiten der gemessenen Phasenverschiebung von der mittleren Strömungsgeschwindigkeit im Kanal. Der Versuchsstand mit der metallischen Flüssigkeit GalnSn ist mit zusätzlichen Strömungsmesstechniken (kommerzieller Durchflussmesser, lokale Geschwindigkeitsmessungen mittels Ultraschall) ausgerüstet, die eine unabhängige Vergleichsmessung des Durchflusses ermöglichen.

Fig. 4 zeigt die entsprechenden Messwerte für die Phasenverschiebung in Abhängigkeit der mittleren Strömungsgeschwindigkeit für den Fall, dass die Empfängerspulen mit Lₑ = Lₛ = 32,5 mm um s = 5 mm in Strömungsrichtung verschoben waren, siehe Fig. 2. Die gemessenen Phasenverschiebungen sind größer als in Ausführungsbeispiel 1, d.h. diese geometrische Anordnung zeigt im Vergleich zu Ausführungsbeispiel 1 eine höhere Empfindlichkeit für die Durchflussmessung in dem konkreten Testfall.

Die Wirkungsweise von Verfahren und Anordnung wird nachstehend beschrieben:

Die Senderspule 3 wird von einem Wechselstrom der Frequenz ω= 2πf durchflossen und erzeugt damit ein magnetisches Wechselfeld. Dieses Feld wird durch die im Kanal strömende, elektrisch leitfähige Flüssigkeit beeinflusst. Die Feldänderung hat eine Verzerrung der Magnetfeldverteilung in Strömungsrichtung zur Folge. Misst man das Magnetfeld an zwei Messorten, beispielsweise entlang des Kanals, so weisen die beiden Magnetfeldsignale i.a. unterschiedliche Amplituden und eine Phasenverschiebung auf. Beide Größen sind grundsätzlich für die Messung des Durchflusses geeignet. Für eine robuste Messung des Durchflusses durch den Kanal erweist sich jedoch die Auswertung der Phasenverschiebung als besonders geeignet, da die Amplitudenmessung sehr empfindlich von der geometrischen Lage der Empfängerspulen abhängt. Diese Lage wird bereits durch prozessinhärente Beeinflussungen, wie z.B. durch thermische Ausdehnung des Eisenkerns oder infolge der in den Spulen fließenden Ströme, in einem Maße verändert, die keine reproduzierbare Bestimmung des Durchflusses mehr erlaubt. Die strömungsinduzierte Phasenverschiebung zwischen den beiden Messorten kann mit beliebigen, für die zeitlich erforderliche Auflösung geeigneten Magnetfeldsensoren **5**, **6** oder Empfängerspulen **5a**, **6a** gemessen werden. Im Ausführungsbeispiel wurden dafür zwei Messspulen benutzt, die gemäß Fig. 2 angeordnet sind, wobei die Phasenverschiebung durch Auswertung der Differenzspannung zwischen den beiden Empfängerspulen mittels eines Lock-In-Verstärkers mit einem Tiefpassfilter bestimmt wird. Die gemessene Phasenverschiebung hängt von der mittleren Strömung V im Kanal, der charakteristischen Dicke H des Kanals und der Frequenz ω = 2πf des Erregerspulenstromes ab. Rechnungen und Testmessungen ergaben, dass es vorteilhaft ist, wenn die dimensionslose Frequenz ω = ω₀σωH² des Erregerstromes sich im Bereich 0.05 < ω < 5 befindet. Dabei ist µₒ die magnetische Permeabilität des Vakuums und σ die elektrische Leitfähigkeit des strömenden Mediums. Der lineare Zusammenhang zwischen gemessener Phasenverschiebung und mittlerem Durchfluss im Kanal geht für hohe Strömungsgeschwindigkeiten verloren, das Messverfahren sollte deshalb für Strömungsgeschwindigkeiten V nicht mehr angewandt werden, falls µ₀σHV > 3. Die Anordnung der Magnetfeldmessstellen kann geometrisch gemäß Fig. 2 variieren, insbesondere durch einen kleineren Abstand der Magnetfeldsensoren im Vergleich zur Abmessung der Senderspule, d.h. Lₑ < Lₛ. Dabei zeigt sich, dass kleinere Abstände zwischen den Messorten i.a. eine höhere Sensitivität der Phasenverschiebung von der Strömungsgeschwindigkeit ergeben, was vorteilhaft für die Messung geringer Durchflüsse ist. Für höhere Geschwindigkeiten gemäß µ₀σHV > 0.5 führen zu kleine Abstände der beiden Messorte jedoch zu einer geringeren Sensitivität der Phasenverschiebung von der Strömungsgeschwindigkeit. Es ist folglich vorteilhaft, für jede konkrete Messanordnung und konkreten Bereich von Durchflüssen den Abstand der beiden Messorte und die Verschiebung s relativ zur Erregerspule zu optimieren.

Die Messung erfolgt dabei kontaktlos und es sind keinerlei Einbauten im Strömungskanal erforderlich. Die Vorteile des kontaktlosen gegenüber herkömmlichen kommerziellen Durchflussmessern liegen vor allem in der vorteilhaften Einsetzbarkeit bei hohen Temperaturen, der direkten Auswertbarkeit des Messsignals Phasenverschiebung und dem einfachen mechanischen und elektrischen Aufbau. Ein weiterer Hauptvorteil besteht in der Tatsache, dass der Durchflussmesser nicht in das Leitungssystem eingebaut werden muss, sondern aufgrund seiner völlig separaten Ausführung auch nachträglich ohne Unterbrechung der Strömung angebracht werden kann. Die Abwesenheit von elektrischen Kontakten zum Fliessmedium und von bewegten Teilen verhindert Verschleißerscheinungen. Der Einsatzbereich erstreckt sich auf alle elektrisch leitfähigen Medien, wobei seine Vorteile gegenüber herkömmlichen Durchflussmessern am stärksten bei flüssigen Metallen zur Geltung gelangen können.

### Bezugszeichenliste

1 - Strömungskanal
2 - Kanalwände
3 - Senderspule
4 - Flussführungseisen der Senderspule
5 - Magnetfeldsensor
6 - Magnetfeldsensor
5a - Empfängerspule
6a - Empfängerspule
7 - Mittelachse der Senderspule

## Patentansprüche

1. Verfahren zur kontaktlosen Messung des Durchflusses elektrisch leitfähiger Medien, wobei ein magnetisches Wechselfeld außerhalb des elektrisch leitfähigen Mediums eingesetzt wird, **dadurch gekennzeichnet, dass** die strömungsbedingte Phasenverschiebung des magnetischen wechselfeldes an zwei in Durchflussrichtung getrennten Messorten als direktes Maß für die mittlere Durchflussgeschwindigkeit des Mediums verwendet wird.

2. Verfahren nach Anspruch 1, **dadurch gekennzeichnet, dass** die Frequenz ω des angelegten magnetischen Wechselfeldes so gewählt wird, dass die dimensionslose Frequenz ω = µ₀σωH² sich im Bereich 0.05 < ω < 5 befindet, wobei µ₀ die magnetische Permeabilität des Vakuums, σ die elektrische Leitfähigkeit des strömenden Mediums H die Kanaldicke und ω=2πf, mit f = Frequenz des magnetischen Wechselfeldes bezeichnen.

3. Anordnung zur Messung des Durchflusses elektrisch leitfähiger Medien, wobei ein magnetisches Wechselfeld mittels einer Senderspule außerhalb des elektrisch leitfähigen Mediums eingesetzt wird, **dadurch gekennzeichnet, dass** zwei Magnetfeld-Erfassungselemente außerhalb des elektrisch leitfähigen Mediums in Durchflussrichtung getrennt angeordnet sind, mit denen die strömungsbedingte Phasenverschiebung des magnetischen wechselfeldes gemessen wird.

4. Anordnung nach Anspruch 3, **dadurch gekennzeichnet, dass** als Erfassungselemente Empfängerspulen eingesetzt sind.

5. Anordnung nach Anspruch 3, **dadurch gekennzeichnet, dass** die Erfassungselemente direkt gegenüber der Senderspule angeordnet sind.

6. Anordnung nach Anspruch 3, **dadurch gekennzeichnet, dass** die Erfassungselemente in einem Winkel bis zu 180 Grad versetzt gegenüber der Senderspule angeordnet sind.

## Claims

1. Method for contactlessly measuring the flow rate of electrically conductive media, an alternating magnetic field being used outside the electrically conductive medium, **characterized in that** the flow-induced phase shift of the alternating magnetic field at two separate measuring locations in the direction of flow is used as a direct measure of the average flow velocity of the medium.

2. Method according to Claim 1, **characterized in that** the frequency ω of the applied alternating magnetic field is selected in such a manner that the dimensionless frequency ω = µ₀σωH² is in the range 0.05 < ω < 5, µ₀ denoting the magnetic permeability of the vacuum, σ denoting the electrical conductivity of the flowing medium and H denoting the channel thickness, and ω = 2πf, with f = frequency of the alternating magnetic field.

3. Arrangement for measuring the flow rate of electrically conductive media, an alternating magnetic field being used outside the electrically conductive medium by means of a transmitter coil, **characterized in that** two magnetic field detection elements are arranged separately in the direction of flow outside the electrically conductive medium and are used to measure the flow-induced phase shift of the alternating magnetic field.

4. Arrangement according to Claim 3, **characterized in that** receiver coils are used as detection elements.

5. Arrangement according to Claim 3, **characterized in that** the detection elements are arranged directly opposite the transmitter coil.

6. Arrangement according to Claim 3, **characterized in that** the detection elements are arranged in an offset manner at an angle of up to 180 degrees with respect to the transmitter coil.

## Revendications

1. Procédé de mesure sans contact du débit de fluides électriquement conducteurs, un champ magnétique alterné étant utilisé en dehors du fluide électriquement conducteur, **caractérisé en ce que** le déphasage lié à l'écoulement du champ magnétique alterné en deux points de mesure séparés dans le sens de l'écoulement est utilisé comme mesure directe pour la vitesse d'écoulement moyenne du fluide.

2. Procédé selon la revendication 1, **caractérisé en ce que** la fréquence
ω du champ magnétique alterné appliqué est choisie de telle sorte que la fréquence sans dimension ω̅ = µ₀σωH² se trouve dans la plage 0,05 < ω̅ < 5, µ0 désignant la perméabilité magnétique du vide, σ la conductivité électrique du fluide qui s'écoule, H l'épaisseur du canal et ω = 2πf, f étant la fréquence du champ magnétique alterné.

3. Arrangement de mesure du débit de fluides électriquement conducteurs, un champ magnétique alterné étant utilisé en dehors du fluide électriquement conducteur au moyen d'une bobine émettrice, **caractérisé en ce que** deux éléments de détection de champ magnétique, avec lesquels est mesuré le déphasage lié à l'écoulement du champ magnétique alterné, sont disposés séparément dans le sens de l'écoulement en dehors du fluide électriquement conducteur.

4. Arrangement selon la revendication 3, **caractérisé en ce que** les éléments de détection utilisés sont des bobines réceptrices.

5. Arrangement selon la revendication 3, **caractérisé en ce que** les éléments de détection sont disposés directement à l'opposé de la bobine émettrice.

6. Arrangement selon la revendication 3, **caractérisé en ce que** les éléments de détection sont disposés décalés selon un angle de jusqu'à 180 degrés par rapport à la bobine émettrice.
